# DEMANDE DE BREVET EUROPEEN

(11) **EP 0 692 195 A2**
(43) Date de publication de la demande: **17.01.1996**
(21) Numéro de dépôt: 95401506.1
(22) Date de dépôt: 26.06.1995
(51) Int. Cl.: A23L 1/226, C11B 9/00, A61K 47/10, A61K 7/46

(54) **Composition de vanilline sous forme liquide, sa préparation et ses applications**

(30) Priorité: 29.06.1994 FR 9407995
(71) Demandeur: RHONE-POULENC CHIMIE S.A., F-92408 Courbevoie (FR)
(72) Inventeur: Fournet, Frédérique, 69009 Lyon (FR); Truchet, Françoise, 69007 Lyon (FR)
(74) Mandataire: Dubruc, Philippe

(57) **Abrégé**

La présente invention a trait à une nouvelle présentation de la vanilline. Plus précisément, l'invention concerne une composition de la vanilline sous forme liquide et son procédé de préparation. L'invention vise également sa mise en oeuvre dans de nombreux domaines d'application, notamment dans l'alimentation humaine et animale.

## Description

La présente invention a trait à une nouvelle présentation de la vanilline. Plus précisément, l'invention concerne une composition de la vanilline sous forme liquide et son procédé de préparation. L'invention vise également sa mise en oeuvre dans de nombreux domaines d'application.

La vanilline est un produit largement utilisée dans de nombreux domaines d'application en tant qu'arôme et/ou parfum.

Ainsi, la vanilline se trouve abondamment consommée dans l'industrie alimentaire et animale mais elle a aussi des applications dans d'autres domaines tels que par exemple, la pharmacie ou la parfumerie. Il s'ensuit que c'est un produit de grande consommation.

La vanilline est actuellement disponible sur le marché sous la forme d'une poudre cristallisée. Les inconvénients qui en résultent sont la présence de fines qui entraînent des problèmes de poussièrage et de coulabilité, lors du stockage et de la manipulation de ladite poudre.

Actuellement, on souhaite disposer dans de multiples applications, des ingrédients sous une forme liquide. En effet, outre que cette forme résolve le problème du poussièrage et de coulabilité, une présentation liquide présente beaucoup d'avantages, en particulier une facilité de dosage et une manipulation plus aisée.

La solubilité de la vanilline dans l'eau étant très faible de l'ordre de 0,5 % à 20°C et de 30 % dans l'éthanol, il s'avère difficile de proposer des solutions concentrées de vanilline telles qu'elles sont demandées par l'utilisateur.

Le problème qui se pose est donc de trouver une nouvelle formulation de la vanilline qui satisfasse aux impératifs suivants :
- se présenter sous la forme d'un produit liquide susceptible d'être versé ou pompé à température ambiante de l'ordre de 15°C à 25°C,
- avoir une bonne concentration en matière active de 20 à 80 % en poids, mais plus généralement entre 50 et 70 %,
- être mécaniquement stable c'est-à-dire, ne pas se séparer en phases lors d'une variation de températures dans une zone se situant entre 0°C et 50°C, ni cristalliser lors d'un stockage prolongé,
- être chimiquement stable,
- posséder une facilité de mise en oeuvre se traduisant par une simple dilution lors de l'emploi,
- se présenter sous la forme d'une solution transparente,
- posséder une stabilité bactérienne et ne pas constituer un terrain favorable à un développement de bactéries dans les conditions de températures optimales,
- répondre aux exigences organoleptiques dans le cas d'un emploi alimentaire,
- être en conformité avec la législation du domaine d'application considéré,
- être facile à fabriquer afin de ne pas grever le prix de vente.

Il a maintenant été trouvé une nouvelle présentation de la vanilline répondant aux exigences précitées.

La présente invention a donc pour objet une nouvelle composition de la vanilline sous forme liquide caractérisée par le fait qu'elle comprend :
- de 30 à 80 % en poids de vanilline,
- de 20 à 70 % en poids d'éthylvanilline,
- un solvant aqueux et/ou organique en une quantité suffisante pour obtenir une solution à la température souhaitée.

Conformément à une modalité préférée de l'invention, la composition de l'invention est caractérisée par le fait qu'elle comprend :
- de 45 à 50 % en poids de vanilline,
- de 50 à 55 % en poids d'éthylvanilline,
- un solvant aqueux et/ou organique en une quantité suffisante pour obtenir une solution à la température souhaitée.

Le solvant susceptible d'être utilisé doit être liquide à température ambiante c'est-à-dire généralement dans une zone de température variant entre 10°C et 25°C, mais le plus souvent, entre 16 et 22°C.

Il doit être chimiquement inerte vis-à-vis de la vanilline et de l'éthylvanilline.

Comme solvants susceptibles d'être mis en oeuvre dans les compositions de l'invention, on peut faire appel, de préférence, à un solvant polaire, protique ou aprotique ou à un mélange de solvants.

On donne ci-après, des exemples de solvants convenant tout à fait à la présente invention :
- l'eau ;
- les monalcools ou les diols, de préférence, aliphatiques ou arylaliphatiques et plus préférentiellement, le méthanol, I'éthanol, le propanol, l'isopropanol, le butanol, l'alcool β-phényléthylique, I'éthylèneglycol, le diéthylèneglycol, le propylèneglycol, le glycérol ;
- les éther-oxydes de préférence, aliphatiques, et, plus particulièrement, le diéthyléther, le dipropyléther, le diisopropyléther, le dibutyléther, le méthyltertiobutyléther, l'éthyltertiobutyléther, le ditertiobutyléther, le diméthyléther de l'éthylèneglycol, le diméthyléther du diéthylèneglycol ;
- les esters d'alkyle ou d'arylalkyle d'acides carboxyliques, aliphatiques, cycloaliphatiques ou aromatiques, et plus préférentiellement, I'acétate d'éthyle, I'acétate de butyle, salicylate de benzyle, le laurate de méthyle, le benzoate de méthyle, le citrate d'éthyle.

Parmi les solvants précités, on choisit préférentiellement l'eau, I'éthanol, le propylèneglycol et leurs mélanges.

Le choix du solvant sera effectué eux égards au domaine d'application envisagée. Ainsi, dans le cas de l'utilisation des compositions de l'invention dans le domaine alimentaire, il est impératif que le solvant utilisé ne soit pas toxique et toléré par les législations de ce domaine.

Les nouvelles composition de vanilline selon l'invention combinent les deux constituant précités, vanilline et éthylvanilline, dans les proportions précitées.

En ce qui concerne le solvant, sa quantité sera d'autant plus élevée que la température d'utilisation est plus basse.

La quantité de solvant mis en oeuvre, exprimée en poids par rapport au poids de matières sèches (vanilline + éthylvanilline) est de 5 à 50 %, et plus préférentiellement, de 10 à 30 %, pour une température d'utilisation de 25°C. La quantité de matières sèches est avantageusement d'au moins 20 % en poids, de préférence comprise entre 50 et 95 %, plus préférentiellement entre 70 et 90 %.

Le mode d'obtention des compositions à base de vanilline selon l'invention est décrit ci-après.

Un autre objet de l'invention est le procédé de préparation desdites compositions qui consiste à mélanger la vanilline, l'éthylvanilline et le solvant sous agitation, puis à chauffer le mélange obtenu afin d'obtenir un liquide que l'on récupère.

Selon un mode préféré de réalisation pratique de l'invention, on introduit de préférence la vanilline et l'éthylvanilline dans le solvant maintenu sous agitation.

Ensuite, on porte le mélange à une température de préférence, inférieure à 50°C, de préférence, comprise entre 20°C et 50°C, et encore plus préférentiellement entre 30°C et 40°C.

On maintient le mélange sous agitation jusqu'à obtention d'une solution homogène. Généralement, la durée varie entre 10 et 60 mn.

Ensuite, on obtient la composition sous forme liquide que l'on conditionne selon les besoins d'usage.

Les compositions de l'invention peuvent être utilisées dans de nombreux domaines d'application, entre autres, dans le domaine alimentaire et pharmaceutique, et dans l'industrie de la parfumerie.

Un domaine d'application privilégié de compositions de l'invention est celui de la biscuiterie et pâtisserie, et plus particulièrement :
- biscuiterie sèche : biscuits sucrés de type classique, petits beurre, galettes, casse-croûte, sablés,
- pâtisserie industrielle : boudoirs champagne, langues de chat, biscuits à la cuillère, pain de gênes, génoise, madeleines, quatre-quarts, cakes, pâtisserie aux amandes, petits fours.

Les éléments fondamentaux présents dans les mélanges destinés aux industries précitées sont les protéines (gluten) et l'amidon qui sont le plus souvent apportés par la farine de froment. Pour la préparation des divers types de biscuits et gâteaux, on ajoute à la farine, des ingrédients tels que saccharose, sel, oeufs, lait, corps gras, éventuellement levures chimiques (bicarbonate de sodium ou autres levures artificielles) ou levures biologiques et farines de céréales diverses etc...

L'incorporation de la composition de vanilline selon l'invention est réalisée au cours de la fabrication, en fonction du produit souhaité et est conduite selon les techniques classiques du domaine considéré (cf. notamment J.L. KIGER et J.C. KIGER - Techniques Modernes de la Biscuiterie, Pâtisserie-Boulangerie industrielles et artisanales, DUNOD, Paris, 1968, Tome 2, pp. 231 et suivantes).

D'une manière préférentielle, la composition de l'invention est introduite dans les corps gras qui interviennent dans la préparation de la pâte.

A titre indicatif, on précisera que la composition de l'invention est introduite en une quantité de 0,07 à 0,17 g par kg de pâte.

Les compositions de vanilline de l'invention sont tout à fait adaptées pour être utilisées dans le domaine de la chocolaterie et quelle que soit la forme de mise en oeuvre : chocolats en plaques, chocolats de couverture, fourrage pour chocolats.

Elles peuvent être introduites au cours du conchage c'est-à-dire du malaxage de la pâte de cacao avec les différents ingrédients, notamment les arômes, soit après le conchage, par mise en oeuvre dans le beurre de cacao.

Dans ce domaine d'applications, les compositions de vanilline de l'invention sont utilisées selon le type de chocolat, à raison de 0,05 g à 0,1 g pour 1 kg de produit fini : les teneurs les plus fortes se retrouvant dans le chocolat pour couverture.

Une autre utilisation des compositions de l'invention est la fabrication des bonbons de tout genre : dragées, caramels, nougats, sucres cuits, bonbons fondants et autres.

Elles sont introduites de préférence en phase liquide.

La quantité de vanilline introduite dépend du goût plus ou moins prononcé que l'on recherche. Ainsi, les doses d'utilisation des compositions de l'invention peuvent varier entre 0,001 % et 0,2%.

Les compositions de l'invention conviennent bien à des utilisations dans l'industrie laitière et plus particulièrement dans les laits aromatisés et gélifiés, les entremets, les yaourts, les glaces et les crèmes glacées.

L'aromatisation se fait par simple addition des compositions de l'invention, dans l'un des stades de mélange requis au cours de l'élaboration du produit.

Les teneurs desdites compositions à mettre en oeuvre sont généralement faibles de l'ordre de 0,02 g pour 1 kg de produit fini.

Une autre application des compositions de l'invention dans le domaine alimentaire est la préparation du sucre vanilliné c'est-à-dire l'imprégnation du sucre avec celles-ci, en une teneur de l'ordre de 7 g exprimée par rapport à 1 kg de produit fini.

Les compositions de l'invention peuvent également intervenir dans différentes boissons et l'on peut citer, entre autres, la grenadine et les boissons chocolatées.

Il est courant d'utiliser la vanilline pour la dénaturation du beurre. A cet effet, les compositions de vanilline de l'invention peuvent être mises en oeuvre à raison de 6 g par tonne de beurre.

Un autre domaine d'application des compositions de l'invention est l'alimentation animale, notamment pour la préparation de farines pour aliments des veaux et des porcs. La teneur préconisée est d'environ 0,2 g par kg de farine à aromatiser.

Les compositions de l'invention peuvent trouver d'autres applications comme agent de masquage, pour l'industrie pharmaceutique (masquage de l'odeur de médicament) ou pour d'autres produits industriels (de type gomme, plastique, caoutchouc...).

Elles conviennent tout à fait bien dans des domaines totalement différents tels que la cosmétique, l'industrie de la parfumerie ou la détergence.

Elles peuvent être utilisées dans les cosmétiques tels que crèmes, laits, fards et autres produits et aussi, comme ingrédients parfumants, dans les compositions parfumantes, substances et produits parfumés.

Par "compositions parfumantes", on désigne des mélanges de divers ingrédients tels que solvants, supports solides ou liquides, fixateurs, composés odorants divers, etc..., dans lesquels sont incorporées les compositions de l'invention, lesquelles sont utilisées pour procurer à divers types de produits finis, la fragrance recherchée.

Les bases pour parfum constituent des exemples préférés de compositions parfumantes dans lesquelles les compositions de l'invention peuvent être avantageusement utilisées à raison d'une teneur de 0,1 % à 2,5 % en poids.

Les bases pour parfum peuvent servir à la préparation de nombreux produits parfumés tels que, par exemple, les eaux de toilettes, les parfums, les lotions après rasage ; les produits de toilette et d'hygiène tels que les gels de bain ou de douche, les produits déodorants ou antiperspirants, qu'ils soient sous forme de sticks ou de lotions, les talcs ou poudres de toute nature ; les produits pour les cheveux tels que les shampooings et les produits capillaires de tout type.

Un autre exemple de mise en oeuvre des compositions de l'invention est le domaine de la savonnerie. Elles peuvent être utilisées à une teneur de 0,3 % à 0,75 % de la masse totale à parfumer. Généralement, la vanilline est associée dans cette application, à du résinoïde de benjoin et de l'hyposulfite de sodium (2 %).

Les compositions de vanilline selon l'invention peuvent trouver de nombreuses autres applications, notamment dans les désodorisants d'air ambiant ou tout produit d'entretien.

On ne sortira pas du cadre de l'invention, à ajouter dans les compositions de l'invention, des additifs requis au niveau de l'application envisagée.

On donne ci-après des exemples illustrant la présente invention, sans caractère limitatif.

Dans les exemples, les pourcentages mentionnés sont exprimés en poids.

### EXEMPLES

Dans les exemples qui suivent, on met en évidence que les compositions de l'invention permettent de solubiliser des quantités plus importantes de vanilline.

A cet effet, on répète le protocole opératoire décrit ci-après.

Dans un réacteur de 2 litres, agité entièrement double-enveloppe, on réalise un mélange d'une suspension liquide-solide, composée de :
- solvant (un seul solvant ou un mélange de solvants)
- soluté (produit pur ou un mélange de produits)

La température du réacteur est contrôlée, régulée et mesurée. Elle est maintenue constante tout au long de l'essai.

Par un système de soutirage (mise sous légère pression du réacteur et soutirage à travers un filtre), on prélève à cette température, le liquide en équilibre de solubilité avec la phase solide. Sur ce liquide, une analyse chimique et/ou une mesure par extrait sec donnent la solubilité du soluté dans le solvant à la température fixée.

Pour être sûr que l'équilibre de solubilité soit atteint, plusieurs mesures sont effectuées jusqu'à l'obtention de résultats constants.

### Exemples 1 à 4

On prépare des compositions selon l'invention contenant de la vanilline, de l'éthylvanilline et comme solvant, un mélange de 60 % en poids d'eau et de 40 % en poids de méthanol.

Dans les exemples 3 et 4, on met en oeuvre un mélange de 80 % en poids de vanilline et de 20 % d'éthylvanillline (exemple 3) et un mélange de 48 % en poids de vanilline et de 52 % d'éthylvanilline (exemple 4).

A titre comparatif, on ne met en oeuvre que de la vanilline (exemple 1) et de l'éthylvanilline (exemple 2).

On détermine la quantité de soluté dans 100 g de solution correspondant aux solvants précités.

On définit les solubilités obtenues à deux températures 10°C et 20 °C.

Les résultats obtenus sont consignés dans le tableau (I) :

**Tableau (I)**

| | Solubilité (g de soluté pour 100 g de solution) | | | |
|---|---|---|---|---|
| Ref. ex. | 1 | 2 | 3 | 4 |
| Soluté | vanilline | éthylvanilline | 80 % vanilline | 48 % vanilline |
| | | | 20% éthylvanilline | 52 % éthylvanilline |
| 10°C | 5 | 2 | 21 | 60 |
| 20°C | 15 | 4 | 40 | 70 |

Il ressort clairement de l'examen du tableau (I), que l'on parvient grâce à la composition de l'invention à solubiliser beaucoup plus de vanilline, à une même température.

### Exemple 5

On donne un exemple de mise en oeuvre de la composition de l'invention dans la synthèse de l'arôme du beurre.

On part d'une composition contenant :
- 53,4 % en poids de vanilline,
- 26,6 % en poids d'éthylvanilline,
- 20 % en poids de propylèneglycol.

Ainsi, on en introduit 10 g dans un mélange contenant 5 g d'acide butyrique, 1,5 g de diacétyle, 0,02 g de citral et 83,5 g de propylène glycol.

Selon l'invention, on supprime ainsi, l'ajout d'une poudre ce qui rend la préparation beaucoup plus aisée.

## Revendications

**1 -** Composition de la vanilline sous forme liquide caractérisée par le fait qu'elle comprend :
- de 30 à 80 % en poids de vanilline,
- de 20 à 70 % en poids d'éthylvanilline,
- un solvant aqueux et/ou organique en une quantité suffisante pour obtenir une solution à la température souhaitée.

**2 -** Composition selon la revendication 1 caractérisée par le fait qu'elle comprend :
- de 45 à 50 % en poids de vanilline,
- de 50 à 55 % en poids d'éthylvanilline,
- un solvant aqueux et/ou organique en une quantité suffisante pour obtenir une solution à la température souhaitée.

**3 -** Composition selon l'une des revendications 1 et 2 caractérisée par le fait que le solvant organique est l'eau et/ou un solvant organique, polaire, protique ou aprotique.

**4 -** Composition selon l'une des revendications 1 à 3 caractérisée par le fait que le solvant est choisi parmi :
- l'eau ;
- les monalcools ou les diols, de préférence, aliphatiques ou arylaliphatiques et plus préférentiellement, le méthanol, I'éthanol, le propanol, l'isopropanol, le butanol, l'alcool β-phényléthylique, I'éthylèneglycol, le diéthylèneglycol, le propylèneglycol, le glycérol ;
- les éther-oxydes de préférence, aliphatiques, et, plus particulièrement, le diéthyléther, le dipropyléther, le diisopropyléther, le dibutyléther, le méthyltertiobutyléther, l'éthyltertiobutyléther, le ditertiobutyléther, le diméthyléther de l'éthylèneglycol, le diméthyléther du diéthylèneglycol ;
- les esters d'alkyle ou d'arylalkyle d'acides carboxyliques, aliphatiques, cycloaliphatiques ou aromatiques, et plus préférentiellement, I'acétate d'éthyle, I'acétate de butyle, salicylate de benzyle, le laurate de méthyle, le benzoate de méthyle, le citrate d'éthyle.

**5 -** Composition selon l'une des revendications 1 à 4 caractérisée par le fait que le solvant est l'eau, I'éthanol, le propylèneglycol et leurs mélanges.

**6 -** Composition selon l'une des revendications 1 à 5 caractérisée par le fait que la quantité de solvant mis en oeuvre, exprimée en poids par rapport au poids de matières sèches (vanilline + éthylvanilline) est de 5 à 50 %, et plus préférentiellement, de 10 à 30 %, pour une température d'utilisation de 25°C.

**7 -** Procédé de préparation d'une composition de vanilline décrite dans l'une des revendications 1 à 6 caractérisé par le fait qu'il consiste à mélanger la vanilline, I'éthylvanilline et le solvant sous agitation, puis à chauffer le mélange obtenu afin d'obtenir un liquide que l'on récupère.

**8 -** Procédé selon la revendication 7 caractérisé par le fait que qu'il consiste à introduire la vanilline et l'éthylvanilline dans le solvant maintenu sous agitation.

**9 -** Procédé selon l'une des revendications 7 et 8 caractérisé par le fait que la température du mélange est une température de préférence, inférieure à 50°C, de préférence, comprise entre 20°C et 50°C, et encore plus préférentiellement entre 30°C et 40°C.

**10 -** Application de la composition de la vanilline sous forme liquide, décrite dans l'une des revendications 1 à 6 comme arôme dans le domaine de l'alimentation humaine et animale, la pharmacie, et comme parfum, dans l'industrie des cosmétiques, de la parfumerie et de la détergence.

**11 -** Application selon la revendication 10 caractérisée par le fait que l'on incorpore la composition de l'invention, au cours de la fabrication d'une pâte, de préférence dans un corps gras, dans le domaine de la biscuiterie sèche et de la pâtisserie industrielle.

**12 -** Application selon la revendication 10 caractérisée par le fait que l'on met en oeuvre la composition de l'invention, dans le domaine de la chocolaterie notamment pour la préparation des chocolats en plaques, des chocolats de couverture ou du fourrage pour chocolats.

**13 -** Application selon la revendication 10 caractérisée par le fait que l'on met en oeuvre la composition de l'invention, au cours de la fabrication des bonbons de tout genre : dragées, caramels, nougats, sucres cuits, bonbons fondants et autres.

**14 -** Application selon la revendication 10 caractérisée par le fait que l'on met en oeuvre la composition de l'invention, dans l'industrie laitière et plus particulièrement dans les laits aromatisés et gélifiés, les entremets, les yaourts, les glaces et les crèmes glacées.

**15 -** Application selon la revendication 10 caractérisée par le fait que l'on met en oeuvre la composition de l'invention pour préparer du sucre vanilliné, par imprégnation du sucre avec celle-ci.

**16 -** Application selon la revendication 10 caractérisée par le fait que l'on met en oeuvre la composition de l'invention au cours de la préparation de différentes boissons, de préférence, la grenadine et les boissons chocolatées.

**17 -** Application selon la revendication 10 caractérisée par le fait que l'on met en oeuvre la composition de l'invention pour la dénaturation du beurre.

**18 -** Application selon la revendication 10 caractérisée par le fait que l'on met en oeuvre, la composition de l'invention dans l'alimentation animale, notamment pour la préparation de farines.

**19 -** Application selon la revendication 10 caractérisée par le fait que l'on met en oeuvre la composition de l'invention comme agent de masquage d'odeur, notamment dans l'industrie pharmaceutique.

**20 -** Application selon la revendication 10 caractérisée par le fait que l'on met en oeuvre la composition de l'invention, dans le domaine de la cosmétique pour la préparation de crèmes, laits et fards et autres produits, comme base parfumante dans la parfumerie et dans le domaine de la détergence, notamment en savonnerie.
